# EUROPÄISCHE PATENTANMELDUNG

(11) **EP 4 703 763 A1**
(43) Veröffentlichungstag der Anmeldung: **04.03.2026**
(21) Anmeldenummer: 25196419.3
(22) Anmeldetag: 18.08.2025
(51) Int. Cl.: G01S 7/41, G01S 13/04, G01S 13/50, G01S 13/56, G01S 13/86, G01S 13/88

(54) **SICHERHEITSSENSOR ZUR ÜBERWACHUNG DER ANWESENHEIT VON PERSONEN**

(30) Priorität: 03.09.2024 DE 102024125121
(71) Anmelder: Pilz GmbH & Co. KG, 73760 Ostfildern (DE)
(72) Erfinder: Ibrocevic, Onedin, 73760 Ostfildern (DE); Castro, Enrique, 73760 Ostfildern (DE); Loy, Stefan, 73760 Ostfildern (DE)
(74) Vertreter: Witte, Weller & Partner Patentanwälte mbB

(57) **Zusammenfassung**

Eine Vorrichtung zur Überwachung der Anwesenheit einer Person auf einer Bodenplatte, weist einen Radarsensor, der dazu eingerichtet ist, Schwingungen der Bodenplatte aufgrund einer Bewegung eines Objekts auf der Bodenplatte, insbesondere aufgrund einer Begehung der Bodenplatte durch eine Person, zu erfassen und ein entsprechendes Signal zu erzeugen, und eine Auswerteeinheit auf, die dazu eingerichtet ist, anhand des Signals zu bestimmen, ob es sich bei dem Objekt um eine Person handelt, und einer Steuereinheit entsprechende Informationen bereitzustellen, um die Sicherheit der Person gewährleisten zu können.

## Beschreibung

Die vorliegende Erfindung betrifft ein System zur Überwachung der Anwesenheit eines Objekts auf einer Bodenplatte. Ferner betrifft die vorliegende Erfindung ein entsprechendes Verfahren.

Mit der fortschreitenden Digitalisierung und Automatisierung in industriellen und öffentlichen Umgebungen wächst die Bedeutung von Sensorsystemen, die eine sichere Interaktion zwischen Menschen und technischen Systemen gewährleisten. Insbesondere in der Industrie 4.0 und in Konzepten wie "Ambient Intelligence" ist es entscheidend, den Menschen vor Gefahren durch Maschinen zu schützen. Dies erfordert zuverlässige und präzise Erkennungstechnologien, um die Präsenz und Aktivitäten von Personen überwachen zu können.

Technische Anlagen (z.B. Maschinen und Roboter) sind in der Regel mit eigenen sicherheitsbezogenen Einrichtungen versehen, die einen Gefahrenbereich der technischen Anlage überwachen und geeignete Maßnahmen ergreifen, wenn eine Gefahrensituation erkannt wird. Sicherheitsbezogene Einrichtungen sind in diesem Zusammenhang u.a. Sicherheitsschaltungsanordnungen, die Sensoren zur Überwachung eines Gefahrenbereichs sowie geeignete Mittel zum Überführen einer technischen Anlage in einen gefahrlosen Zustand umfassen. Im einfachsten Fall schaltet ein Schaltgerät eine technische Anlage stromlos, sobald von dem Sensor ein Gefahrenzustand erkannt wird, so dass von der Anlage keine Gefahr mehr ausgehen kann. In Produktionshallen beispielsweise, in denen verschiedene Arbeitsprozesse unter Verwendung mehrerer technischer Anlagen erfolgen, ist neben der Sensorik der einzelnen Anlagen aber auch ein globaleres Überwachungssystem erforderlich. Dieses soll möglichst alle laufenden Prozesse im Blick haben, also flächig ausgelegt sein, und in vorausschauender Weise den dort arbeitenden Menschen vor Gefahren schützen. Weiterhin sollten die eingesetzten Überwachungssysteme möglichst flexibel und skalierbar sein, um sich an unterschiedliche Produktionsprozesse anpassen zu können.

Gängige Sicherheitssysteme, wie beispielsweise kamerabasierte Systeme, werden dieser Aufgabe nur unzureichend gerecht. Insbesondere weisen derartige Systeme Einschränkungen in der Zuverlässigkeit und Differenzierfähigkeit auf, insbesondere wenn es darum geht, zwischen verschiedenen Arten von Objekten, wie Menschen und Maschinen, zu unterscheiden. Dementsprechend kann ein zuverlässiger Schutz von Personen und ein gleichzeitiger reibungsloser Produktions- oder Logistikprozess mit derartigen Sicherheitssystemen nicht gewährleistet werden.

Radarsensoren zur Personenerkennung können hier Abhilfe schaffen. Die DE 10 2022 102 784 A1 offenbart eine Vorrichtung zur Erfassung eines Objekts auf einer Bodenplatte mit einer Unterseite und einer der Unterseite gegenüberliegenden, betretbaren Oberseite, wobei das System eine Halterung an, in oder unter der Bodenplatte aufweist und eine Radarvorrichtung aufweist, wobei die Radarvorrichtung dazu ausgestaltet ist, ein Radarsignal auszusenden, ein von dem Objekt reflektiertes Radarecho zu erfassen und ein Datensignal basierend auf dem Radarecho bereitzustellen, wobei die Halterung dazu ausgestaltet ist, die Radarvorrichtung aufzunehmen.

Mit dieser Technologie kann zwischen Mensch und technischer Anlage in zuverlässiger Weise unterschieden werden. Allerdings ist hierfür eine präzise Positionierung bzw. Verteilung der Radarvorrichtungen notwendig, um sicherzustellen, dass der gesamte Boden bzw. Raum erfasst und überwacht werden kann. Insbesondere dann, wenn ein ganzes Netz von Radarvorrichtungen benötigt wird, wie z.B. zur flächendeckenden Überwachung einer Fabrikhalle, kann der Aufbau eines entsprechenden Überwachungssystems sehr aufwendig werden.

Vor diesem Hintergrund ist es eine Aufgabe der vorliegenden Erfindung, ein System bereitzustellen, das eine Erfassung von Objekten auf einer Bodenplatte und deren Unterscheidung (insbesondere eine Unterscheidung zwischen Mensch und technischen Anlagen wie Maschinen, Robotern etc.) in noch zuverlässigerer Weise ermöglicht. Das System soll in einfacher Weise einzusetzen sein und eine größere Flexibilität zulassen, was die (Sensor-)Positionierung angeht. Gleichzeitig soll das System möglichst kostengünstig sein.

Gelöst wird die Aufgabe durch ein System zur Überwachung der Anwesenheit einer Person auf einer Bodenplatte, wobei das System einen Radarsensor und eine Auswerteinheit aufweist. Der Radarsensor ist dazu eingerichtet, Schwingungen der Bodenplatte aufgrund einer Bewegung eines Objekts auf der Bodenplatte, insbesondere aufgrund einer Begehung der Bodenplatte durch eine Person, zu erfassen und ein entsprechendes Signal zu erzeugen. Die Auswerteeinheit ist dazu eingerichtet, anhand des Signals zu bestimmen, ob es sich bei dem Objekt um eine Person handelt, und einer Steuereinheit entsprechende Informationen bereitzustellen, um die Sicherheit der Person gewährleisten zu können.

Bei dem System handelt es sich um ein Sicherheitssystem im Sinne der funktionalen Sicherheit.

Es ist somit eine Idee der vorliegenden Erfindung, die Anwesenheit von Personen bzw. deren Bewegungen auf der Bodenplatte nicht direkt zu überwachen, sondern indirekt über Vibrationen bzw. Schwingungen der Bodenplatte, wenn diese betreten wird.

Zur Erfassung der Schwingungen ist ein Radarsensor vorgesehen, der dazu eingerichtet ist, ein Radarsignal (insbesondere zur Bodenplatte hin) auszusenden, ein (insbesondere von der Bodenplatte) reflektiertes Radarecho zu erfassen und ein entsprechendes Signal bereitzustellen. Genauer gesagt, ist der Radarsensor dazu eingerichtet, kontinuierlich oder in Pulsen elektromagnetische Wellen im Radar-Frequenzbereich auszusenden. Vorzugsweise werden Wellen im Millimeterbereich (vorzugsweise 60 bis 65 GHz oder noch höher) verwendet, da diese Frequenzbereiche die notwendige Auflösung und Empfindlichkeit bieten, um kleine und schnelle Bewegungen bzw. Schwingungen präzise zu erfassen. Wenn die ausgesendeten Wellen auf die Bodenplatte treffen, werden sie zumindest teilweise reflektiert. Die Stärke der Reflexion hängt von den Materialeigenschaften und der Oberfläche der Bodenplatte ab. Der Radarsensor ist dazu eingerichtet, die reflektierten Wellen zu empfangen. Wenn die Bodenplatte schwingt bzw. sich bewegt, ändert sich der Abstand zwischen dem Radarsensor und der Bodenplatte. Diese Abstandsänderung führt zu einer Phasenverschiebung und/oder einer Frequenzänderung (Dopplereffekt) der reflektierten Wellen. Der Radarsensor stellt sodann ein Signal zu Verfügung, aus dem die Bewegung und Schwingung der Bodenplatte abgeleitet werden kann.

Mittels der Auswerteeinheit wird anhand des Signals des Radarsensors bestimmt, ob es sich bei dem Objekt um eine Person handelt. Da die Begehung der Bodenplatte durch eine Person eine andere Art von Schwingung der Bodenplatte hervorruft als beispielsweise ein FTS (fahrerloses Transportsystem), das über die Bodenplatte fährt, kann grundsätzlich anhand der erfassten Schwingung erkannt werden, um welche Art von Objekt es sich handelt. Insbesondere kann somit grundsätzlich zwischen Mensch und Maschine unterschieden werden. Die Auswerteeinheit dazu eingerichtet sein, die Frequenz, Amplitude und/oder Dauer der Schwingungen anhand des Signals auszuwerten. Die Bestimmung, ob sich eine Person auf der Bodenplatte befindet, kann z.B. mittels einer Wahrscheinlichkeitsberechnung erfolgen. D.h. die Auswerteeinheit kann dazu eingerichtet sein, die Wahrscheinlichkeit zu berechnen, mit welcher sich eine Person auf der Bodenplatte befindet und diese Wahrscheinlichkeit der Steuereinheit zur Verfügung zu stellen. Gleichwohl ist denkbar, dass die Auswerteeinheit dazu ausgebildet ist, anhand des Signals ausschließen zu können, ob sich eine Person auf der Bodenplatte befindet. Weitere Herangehensweisen zur Bestimmung der Anwesenheit/Bewegung einer Person auf der Bodenplatte sind denkbar.

Nach erfolgter Auswertung kann die Auswerteinheit der Steuereinheit entsprechende Informationen bereitstellen, so dass die Steuereinheit, falls notwendig, Maßnahmen einleiten kann, um die Sicherheit von Personen gewährleisten zu können.

Die Auswerteeinheit muss nicht notwendigerweise direkt bei dem Radarsensor angeordnet sein, sondern kann auch im Sinne eines Systems weiter weg von dieser angeordnet sein. Insbesondere kann die Auswerteeinheit bei der Steuereinheit angeordnet sein.

Das erfindungsgemäße System bietet mehrere Vorteile:

Zum einen kann der Radarsensor die Schwingungen der Bodenplatte erfassen, ohne die Bodenplatte physisch berühren zu müssen. Die ermöglicht eine ungestörte Messung. Ferner verfügen Radarsensoren über eine hohe Empfindlichkeit und können daher sehr kleine Bewegungen und Schwingungen detektieren, wodurch sie auch bei minimalen Schwingungen zuverlässig arbeiten. So können Bewegungen auf der Bodenplatte schnell erkannt werden, um rechtzeitig Alarme auszulösen oder Maschinen (z.B. Roboter) oder andere Vorrichtungen abzuschalten.

Das neue System kann in einfacher Weise nachgerüstet werden. Es muss lediglich ein bestehendes Bodensystem (beispielsweise ein Doppelbodensystem) um einen entsprechenden Radarsensor ergänzt werden. Dabei ist die genaue Positionierung des Radarsensors nicht von Belang. Insbesondere ist es nicht erforderlich, dass der Radarsensor die Gesamtheit einer Bodenplatte erfasst. Da nur die Schwingungen bzw. Vibrationen der Bodenplatte erfasst werden müssen, reicht es aus, wenn nur ein Teil der Bodenplatte durch den Radarsensor erfasst wird. Auch an das Material der Bodenplatte werden weniger Bedingungen gestellt, da es nicht erforderlich ist, dass die Bodenplatte (teilweise) durchlässig für Radarstrahlen ist. Materialien, die eine geringe Durchlässigkeit für Radarstrahlen aufweisen sind sogar vorteilhaft.

Die oben genannte Aufgabe wird ferner durch ein entsprechendes Verfahren gelöst.

Vorteilhafte Ausgestaltungen und Weiterbildungen der Erfindung ergeben sich aus den abhängigen Ansprüchen.

In einer Ausgestaltung des Systems ist die Bodenplatte Teil eines Doppelbodensystems.

Doppelbodensysteme werden immer häufiger in Produktions- und Logistikhallen eingesetzt, um eine verborgene Verlegung von Kabeln und Leitungen zu ermöglichen. Die Integration des Radarsensors in solch ein System erlaubt eine diskrete Überwachung und erhöht die Sicherheit, ohne das Design oder die Funktionalität der Bodenstruktur zu beeinträchtigen.

In einer Ausgestaltung ist der Radarsensor dazu eingerichtet in, an, unter oder über der Bodenplatte angebracht zu werden.

Eine Erfassung von Vibrationen bzw. Schwingungen der Bodenplatte kann sowohl von oberhalb als auch von unterhalb der Bodenplatte erfolgen. Der Radarsensor kann dabei in einem Abstand von der Bodenplatte angeordnet sein, er kann aber auch direkt mit der Bodenplatte verbunden sein oder in der Bodenplatte angeordnet sein und selbst den Vibrationen ausgesetzt sein. Im zweiten Fall, muss allerdings dafür gesorgt werden, dass die Radarstrahlen von einem unbewegten bzw. unbeweglichen Ziel reflektiert werden. Diese Flexibilität in der Anbringung erlaubt eine Anpassung an unterschiedliche bauliche Gegebenheiten und ermöglicht eine optimale Erfassung der Schwingungen.

In einer anderen Ausgestaltung des Systems ist der Radarsensor dazu eingerichtet, Schwingungen der Bodenplatte in einem Frequenzbereich zwischen 1 Hz und 50 Hz, bevorzugt zwischen 3 Hz und 40 Hz, besonders bevorzugt zwischen 5 Hz und 30 Hz, zu erfassen, und/oder wobei der Radarsensor dazu eingerichtet ist, in einem Frequenzbereich zwischen 60 GHz und 64 GHz betrieben zu werden.

Der genannte Frequenzbereich der Schwingungen der Bodenplatte ist typisch für die durch menschliche Aktivitäten verursachten Schwingungen und ermöglicht eine präzise Detektion von Bewegungen, die für Sicherheitsüberwachungen relevant sind. Mit anderen Worten wird durch die Erfassung von Schwingungen in dem genannten Frequenzbereich die Genauigkeit des Systems erhöht, indem es besser zwischen verschiedenen Quellen von Schwingungen unterscheiden kann. Derartige Schwingungen können in präziser Weise mit einem Radarsensor erfasst werden, der dazu eingerichtet ist, in einem Frequenzbereich zwischen 60 GHz und 64 GHz betrieben zu werden,

In einer weiteren Ausgestaltung umfasst das System ferner zumindest einen weiteren Sensor zur Erfassung der Schwingungen der Bodenplatte, wobei der zumindest eine weitere Sensor einen oder mehrere (aus der Gruppe) von
einem Kontaktschalter zwischen der Bodenplatte und einem Kontaktelement,
einem Luftdrucksensor zur Messung der Frequenz des Luftdrucks unter oder über der Bodenplatte,
einem Vibrationssensor, insbesondere ein Laser-Doppler-Vibrometer,
einer Lichtschranke,
einem Köperschallsensor zur Messung des Köperschalls der Bodenplatte,
einem Kraftsensor zur Messung einer Kraft, insbesondere einer Gewichtskraft, auf die Bodenplatte,
einem Dehnmessstreifen zur Messung von Dehnungen oder Stauchungen der Bodenplatte,
einer Sensorfolie mit Kohlesensorschichten auf der Ober- oder Unterseite der Bodenplatte, und
einem Beschleunigungssensor an der Bodenplatte und/oder einer Stütze der Bodenplatte
aufweist.

Die Ergänzung mit weiteren Sensoren verbessert die Zuverlässigkeit und Genauigkeit der Überwachung, da verschiedene Detektionsverfahren kombiniert werden können, um eine robustere Datenbasis zu schaffen.

Vorzugsweise ist die Auswerteinheit dazu eingerichtet, die von den (zusätzlichen) Sensoren erzeugten Signale ebenfalls auszuwerten und anhand dieser Signale zu bestimmen, ob es sich bei dem Objekt auf der Bodenplatte um eine Person handelt (und der Steuereinheit entsprechende Informationen bereitzustellen).

In einer weiteren Ausgestaltung weist das System ferner die Bodenplatte auf.

Dies hat den Vorteil, dass die Bodenplatte speziell für die Integration von des Radarsensors und damit für eine optimale Erfassung von Schwingungen gestaltet werden kann. Bevorzugt ist die Bodenplatte vorzugsweise quadratisch oder rechteckig und hat eine Seitenlänge zwischen 500 mm und 700 mm, bevorzugt zwischen 550 mm und 650 mm.

Zur Verbesserung der Schwingungserfassung kann vorgesehen sein, die Bodenplatte auf verschiedene Weisen zu lagern. Vorstellbar ist, dass die Bodenplatte dazu eingerichtet ist, an ihren Ecken fest oder elastisch am Untergrund (bspw. den Ständern eines Doppelbodensystems) angebracht zu werden, insbesondere verschraubt zu werden. Denkbar ist aber auch eine "schwimmende" Lagerung, in der die Ecken lediglich am Untergrund aufliegen. Auch eine elastische Lagerung an den Ecken, insbesondere durch ein Federdämpfersystem, ist denkbar. Gleichwohl sind auch andere Lagerungsarten vorstellbar. Vorteilhaft an einem Doppelbodensystem ist, dass die Lagerung der Bodenplatte in diesem Fall in der Regel definiert ist, sodass Schwingen der Bodenplatte präzise erfasst werden können.

In einer Ausgestaltung weist die die Bodenplatte ein oder mehrere Kohlemikrophone zur Messung der Schwingungen der Bodenplatte auf und/oder die Bodenplatte weist Kohlepartikel auf, wobei das System einen Sensor zur Frequenzanalyse der Kohlepartikel aufweist.

Hierbei werden die Eigenschaften von Kohle zur Erfassung mechanischer Bewegungen ausgenutzt.

In einer bevorzugten Ausgestaltung weist das System ferner die Steuereinheit auf, die dazu eingerichtet ist, einen Sicherheitsalarm auszulösen und/oder ein Stillsetzen einer oder mehrerer technischer Anlagen auf und/oder in der Nähe der Bodenplatte zu veranlassen, wenn durch die Auswerteinheit bestimmt wird, dass die Schwingungen der Bodenplatte durch eine Person verursacht werden.

In dieser Ausgestaltung ist somit ein System gegeben, das über den Radarsensor bzw. die Auswerteeinheit eine Gefahrensituation erfasst und über die Steuereinheit unter Umständen ein Einwirken auf eine technische Anlage bewirken kann. Hierfür kann vorgesehen sein, dass über die Steuereinheit ein Aktor angesteuert wird, um auf die technische Anlage zu wirken, insbesondere diese stillzusetzen (d.h. anzuhalten oder auszuschalten).

Die Fähigkeit, automatisch einen Sicherheitsalarm auszulösen oder technische Anlagen zu stoppen, erhöht die Sicherheit signifikant, indem das System proaktiv auf erkannte Gefahren reagiert und so Unfälle verhindern kann.

Gemäß einer weiteren Ausgestaltung des Systems ist die Auswerteeinheit ferner dazu eingerichtet ist, das Signal des Radarsensors zu filtern, insbesondere um Hintergrundrauschen zu unterdrücken.

Zum Filtern können vorzugsweise einer oder mehrere (weitere) Radarsensoren in der Nähe des Radarsensors bzw. der Bodenplatte verwendet werden, wobei ein oder mehrere Referenzsignale der weiteren Radarsensor(en) ausgewertet werden können. Insbesondere kann ein Differenzsignal zum Filtern erzeugt werden. Alternativ könnte auch eine Referenz(boden)platte mit einem Referenzradarsensor, welche nicht betreten wird bzw. betreten werden kann, zum Filtern des Signals verwendet werden.

Das Filtern des Signals zur Unterdrückung von Hintergrundrauschen erhöht die Signalqualität und somit die Zuverlässigkeit und Genauigkeit der Personenerkennung. Insbesondere kann ein sog. "Noise Cancelling" in der Auswerteinheit vorgenommen werden.

Bevorzugt weist das System mehrere Radarsensoren auf, wobei die Auswerteeinheit besonders bevorzugt dazu eingerichtet, das Signal mehrerer Radarsensoren auszuwerten und anhand der mehreren Signale zu bestimmen, ob es sich bei einem Objekt auf einer der (den Radarsensoren zugeordneten Bodenplatten) um eine Person handelt. Damit kann beispielsweise eine Fabrikhalle mit vielen Radarsensoren in einfacher Weise überwacht werden.

Vorteilhafterweise sind der Radarsensor, die Auswerteeinheit und/oder die Steuereinheit mehrkanalig redundant ausgelegt. D.h. es werden zur Verbindung der genannten Einheiten untereinander mindestens zwei Kanäle, die als redundantes Paar den Ausfall Systems verhindern sollen, verwendet. Mit anderen Worten wird durch die Komponenten des Systems vorzugsweise eine mehrkanalige Struktur gebildet. Besonders bevorzugt wird durch die Komponenten des Systems eine diversitäre Struktur gebildet, d.h. es werden in den Kanälen zueinander verschiedene Teile eingesetzt, die dieselbe Funktion ausführen, aber beispielsweise von verschiedene Herstellern produziert worden sind, um so Fehler gemeinsamer Ursache ausschließen zu können. Durch diese Maßnahme kann die Sicherheit weiter erhöht werden.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines ersten Ausführungsbeispiels des Systems zur Überwachung der Anwesenheit einer Person auf einer Bodenplatte gemäß der vorliegenden Erfindung;
- Fig. 2: eine schematische Darstellung eines zweiten Ausführungsbeispiels des Systems gemäß der vorliegenden Erfindung;
- Fig. 3: eine schematische Darstellung eines dritten Ausführungsbeispiels des Systems gemäß der vorliegenden Erfindung;
- Fig. 4: eine schematische Darstellung eines vierten Ausführungsbeispiels des Systems gemäß der vorliegenden Erfindung;
- Fig. 5: eine schematische Darstellung eines fünften Ausführungsbeispiels des Systems gemäß der vorliegenden Erfindung; und
- Fig. 6: ein Flussdiagramm eines Ausführungsbeispiels des Verfahrens gemäß der vorliegenden Erfindung.

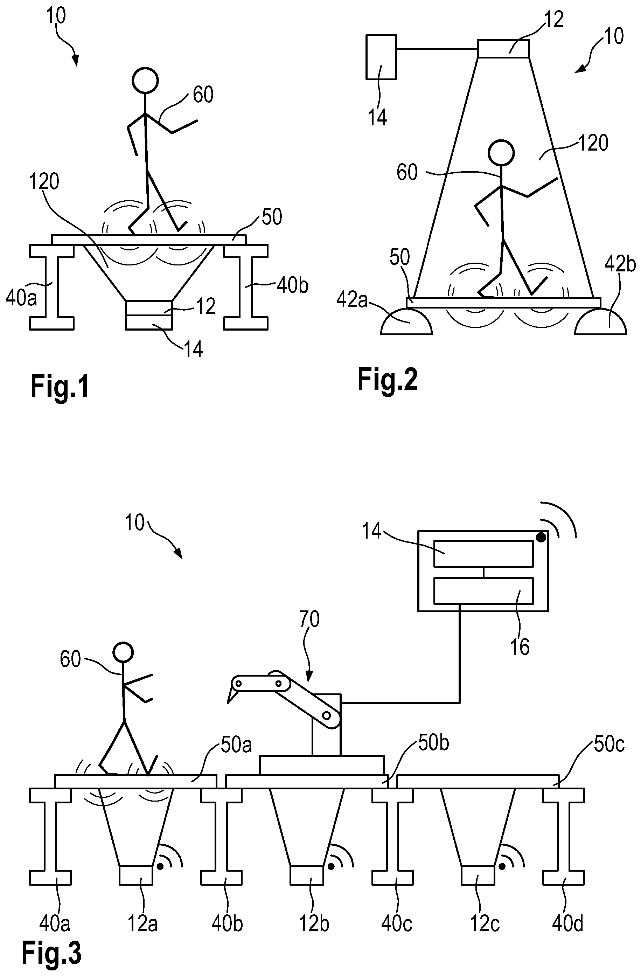

Fig. 1 zeigt eine schematische Darstellung eines ersten Ausführungsbeispiels des Systems zur Überwachung der Anwesenheit einer Person auf einer Bodenplatte gemäß der vorliegenden Erfindung. Das System wird darin insgesamt mit der Bezugsziffer 10 bezeichnet.

Das System umfasst einen Radarsensor 12, der unterhalb einer Bodenplatte 50 eines Doppelbodensystems mit den Stützen 40a und 40b angeordnet ist. Die Bodenplatte ist begehbar und wird vorliegend von einer Person 60 begangen. Dadurch werden Schwindungen in der Bodenplatte 50 hervorgerufen, die in Fig. 1 durch bogenförmige Linien angedeutet sind. Der Radarsensor 50 ist dazu eingerichtet, die Schwingungen der Bodenplatte 50 aufgrund der Bewegung eines Objekts, insbesondere der Person 60, auf der Bodenplatte zu erfassen und ein entsprechendes Signal zu erzeugen. Der Strahlenkegel 120 erfasst dabei vorliegend die Bodenplatte 50 fast in Gänze. Prinzipiell wäre zur Erfassung der Schwingungen aber auch ein Radarsensor mit schmälerem Strahlenkegel 120 denkbar.

Mit dem Radarsensor 12 verbunden und bei diesem angeordnet ist eine Auswerteeinheit 14, die dazu eingerichtet ist, das von dem Radarsensor 12 erzeugte Signal auszuwerten bzw. zu analysieren und zu bestimmen, ob die erfasste Schwingung durch eine Person verursacht wurde (oder verursacht worden sein könnte). Zu diesem Zweck ist die Auswerteeinheit 14 insbesondere dazu eingerichtet, eine Frequenzanalyse des (Radar-)Signals durchzuführen. Informationen, die sich darauf beziehen, ob es sich bei dem erfassten Objekt um eine Person 60 handelt, können dann beispielsweise einer Steuereinheit (nicht dargestellt) zur Verfügung gestellt werden, um gegebenenfalls weitere Maßnahmen einzuleiten, um die Sicherheit der Person 60 gewährleisten zu können.

In dem in Fig. 1 gezeigten Ausführungsbeispiel ist die Auswerteeinheit 14 im Sinne einer Vorrichtung direkt bei dem Radarsensor 12 angeordnet. Dies ist aber nicht zwingend erforderlich. Denkbar ist auch, dass die Auswerteeinheit14 an einem anderen Ort, etwa einem zentralen Rechner, insbesondere außerhalb des Doppelbodenbereichs, angeordnet ist. Besonders bevorzugt kann die Auswerteeinheit 14 bei einer Steuereinheit 16 angeordnet werden.

Fig. 2 zeigt eine schematische Darstellung eines zweiten Ausführungsbeispiels des Systems 10 gemäß der vorliegenden Erfindung.

Hierbei ist der Radarsensor 12 nicht unterhalb, sondern oberhalb der Bodenplatte 50 angeordnet. Diese Anordnung ist insbesondere dann vorteilhaft, wenn unter der Bodenplatte 50 nur wenig Stauraum vorhanden ist. Da die Bodenplatte 50 in dem in Fig. 2 gezeigten Ausführungsbeispiel zwar schwimmen auf Stützen 42a und 42b gelagert ist, es sich aber um kein Doppelbodensystem im eigentlichen Sinne handelt, können sich zwar Schwingungen der Bodenplatte 50 ausbilden, eine Anordnung des Radarsensors 50 unterhalb der Bodenplatte 50 wäre aber kaum möglich. Dennoch können mit dem erfindungsgemäßen System die Schwingungen der Bodenplatte 50 erkannt werden, da der Radarsensor 12 auch ohne Weiteres oberhalb der Bodenplatte 50 angebracht werden kann, um von dort die Schwingungen zu erfassen.

In dem gezeigten Beispiel ist die Auswerteeinheit 14 weiter entfernt von dem Radarsensor 12 angeordnet. Die Verbindung zwischen der Auswerteeinheit 14 und dem Radarsensor 12 ist als kabelgebundene Verbindung gezeigt. Grundsätzlich ist aber auch denkbar, dass zwischen den genannten Einheiten eine drahtlose Kommunikation erfolgt, d.h. dass der Radarsensor 12 und die Auswerteeinheit 14 jeweils eine drahtlose Kommunikationsschnittstelle aufweisen können, um die Übertragung des (Radar-)Signals von dem Radarsensor 12 zu der Auswerteeinheit 14 gewährleisten zu können.

Fig. 3 zeigt eine schematische Darstellung eines dritten Ausführungsbeispiels des Systems 10 gemäß der vorliegenden Erfindung.

Das System 10 gemäß Fig. 3 umfasst mehrere, genauer gesagt drei, Radarsensoren 12a, 12b und 12c, die jeweils einer Bodenplatte 50a, 50b und 50c zugeordnet sind bzw. diese überwachen. Auf der Bodenplatte 50a befindet sich eine sich bewegende Person 60. Auf der benachbarten Bodenplatte 50b befindet sich eine Maschine 70, wobei es sich bei der Maschine 70 um einen Roboter handelt. Der Schwenkarm des Roboters (nicht näher bezeichnet) stellt dabei prinzipiell eine Gefahr für die Person 60 dar. Insofern ist es geboten, dass die Person 60 rechtzeitig vor dieser Gefahr gewarnt wird oder der Roboter seinen Betrieb einstellt, sobald die Person 60 in dessen Gefahrenzone eintritt.

Zu diesem Zweck sind die Radarsensoren 12a, 12b und 12c mit einer (gemeinsamen) Auswerteeinheit 14 verbunden. Diese ist dazu eingerichtet, die Signale der Radarsensoren 12a, 12b und 12c auszuwerten und zu bestimmen, ob sich eine Person 60 auf der jeweils zugehörigen Bodenplatte 50 befindet. Die Auswerteeinheit 14 kann sodann der Steuereinheit entsprechende Informationen zur Verfügung stellen. In dem gezeigten Fall würde die Auswerteeinheit 14 der Steuereinheit 16 mitteilen, dass sich auf der Bodenplatte 50a eine Person befindet. Sofern die Bodenplatte 50a der Gefahrenzone der Maschine 70 zugehören würde, könnte die die Steuereinheit beispielsweise veranlassen, dass die Person 60 durch ein (akustisches oder visuelles) Alarmsignal vor der Gefahr des Roboters gewarnt wird. Alternativ oder zusätzlich könnte die Steuereinheit 16 ein Anhalten der Maschine 70 veranlassen, beispielsweise so lange, bis die Person 60 wieder die Gefahrenzone verlassen hat.

Die Steuereinheit 16 ist in dem gezeigten Beispiel mit der Auswerteeinheit 14 in einer gemeinsamen Einheit integriert. Zu der Maschine 70 besteht eine kabelgebundene Verbindung, während die Kommunikation zwischen der Auswerteinheit 14 und den Radarsensoren 12a, 12b und 12c kabellos ausgestaltet ist. Andere Kommunikationsmöglichkeiten sind ebenso denkbar.

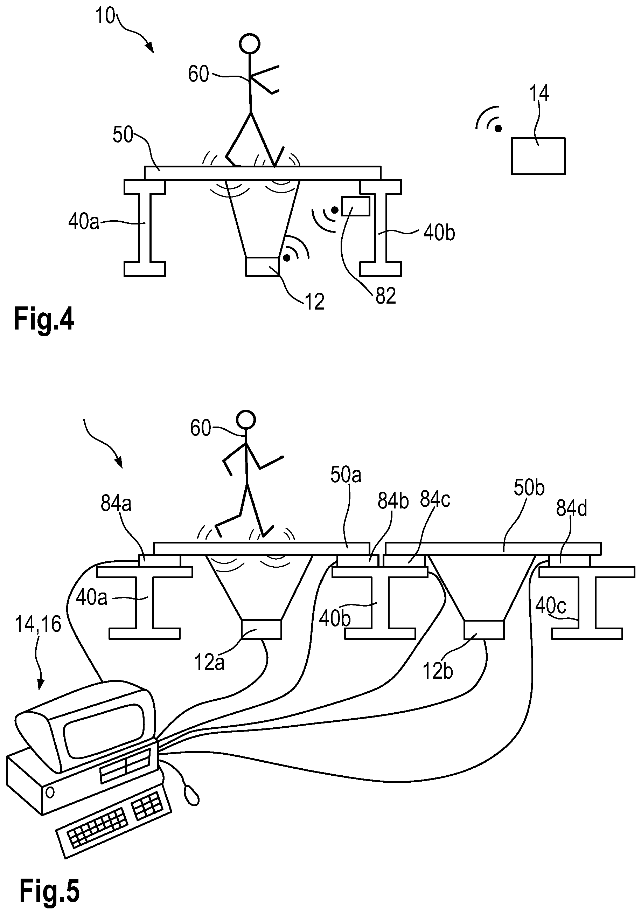

Fig. 4 zeigt eine schematische Darstellung eines vierten Ausführungsbeispiels des Systems 10 gemäß der vorliegenden Erfindung.

Das System 10 gemäß Fig. 4 umfasst einen Radarsensor 12, der unterhalb einer Bodenplatte 50 eines Doppelbodensystems angeordnet ist, einen Luftdrucksensor 82 zur Messung der Frequenz des Luftdrucks unter der Bodenplatte 50 und eine Auswerteeinheit 14, die drahtlose sowohl mit dem Radarsensor 12 als auch mit dem Luftdrucksensor 82 verbunden ist.

Der Radarsensor 12 ist dazu eingerichtet, Schwingungen der Bodenplatte 50 zu erfassen und ein entsprechendes Signal an die Auswerteeinheit 14 abzugeben. Der Luftdrucksensor 82 ist dazu eingerichtet, den Luftdruck unterhalb der Bodenplatte 50 zu erfassen und ebenfalls ein entsprechendes Signal der Auswerteinheit 14 zur Verfügung zu stellen. Bei Begehung oder Bewegung einer Person auf der Bodenplatte 50 führt diese der Bewegung entsprechende Schwingungen aus. Dies hat zur Folge, dass auch die Luft in der näheren Umgebung der Bodenplatte entsprechenden Schwingungen unterworfen ist, die sich in Schwankungen des Luftdruckes zeigen. Daher können aus Schwankungen des Luftdruckes in der Nähe der Bodenplatte 50, hier unterhalb der Bodenplatte 50, Rückschlüsse gezogen werden, ob sich eine Person 60 auf der Bodenplatte befindet.

Die Auswerteeinheit 14 ist dazu eingerichtet, sowohl das Signal des Radarsensors 12 als auch das Signal des Luftdrucksensors 82 dahingehend auszuwerten, ob sich eine Person auf der Bodenplatte befindet (oder (wahrscheinlich) befinden könnte). Dadurch, dass ein weiteres Signal ausgewertet wird, ist eine Redundanz gegeben, sodass die Verfügbarkeit gesteigert wird und damit die Sicherheit es Systems 10 weiter erhöht wird.

Fig. 5 zeigt eine schematische Darstellung eines fünften Ausführungsbeispiels des Systems 10 gemäß der vorliegenden Erfindung.

Das System 10 umfasst zwei Radarsensoren 12a und 12b, die unterhalb der Bodenplatten 50a bzw. 50b eines Doppelbodensystems angeordnet sind und die jeweils mit einer (gemeinsamen) Auswerteeinheit 14 verbunden sind. Ferner verfügt das System über mehrere Kontaktschalter 84a, 84b, 84c und 84d, die zwischen den Bodenplatten 50a bzw. 50b und den Stützen 40a, 40b bzw. 40c der Bodenplatten angeordnet sind. Auch eine Steuereinheit 16 ist Teil des Systems 10.

Sobald ein Objekt, insbesondere eine Person, eine der Bodenplatten 50 betritt, senken sich dieses aufgrund des Gewichts des Objektes ab. Dadurch werden die der jeweiligen Bodenplatten 50 zugeordneten Kontaktschalter 84 ausgelöst bzw. die Kontaktschalter 84 sind dazu eingerichtet, ein entsprechendes Signal an die Auswerteeinheit 14 zu senden. Gleichzeitig kommt es, sofern es sich bei dem Objekt auf der Bodenplatte 50 um eine Person 60 handelt, für Personen 60 typische Schwingungen. Diese können von den Radarsensoren 12a bzw. 12b erfasst werden

Die Auswerteeinheit 14 ist dazu eingerichtet, sowohl die Signale der beiden Radarsensoren 12a und 12b auszuwerten als auch die Signale der Kontaktschalter 84a, 84b, 84c und 84d, um zu bestimmen, ob sich eine Person 60 auf einer der Bodenplatten 50 a und 50b befindet bzw. sich auf einer dieser Bodenplatten bewegt. Falls eine Person 60 erkannt wird, kann die Steuereinheit 16 die Ausgabe eines Warnsignals veranlassen und/oder den Betrieb etwaiger Maschinen oder anderer Gefahrenquellen auf den Bodenplatten stoppen, um eine möglichst hohe Sicherheit für die Person 60 gewährleisten zu können.

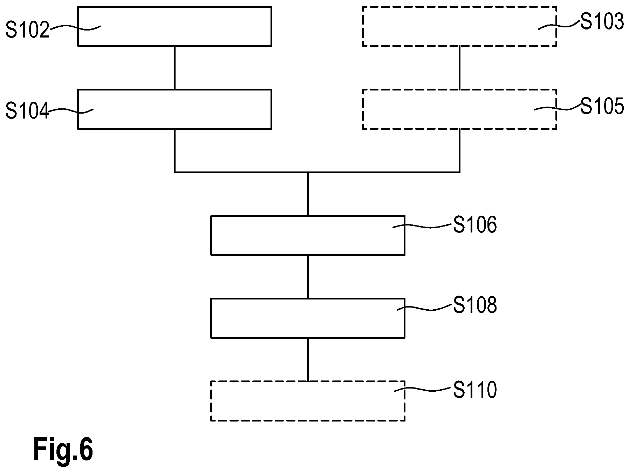

Fig. 6 zeigt ein Flussdiagramm eines Ausführungsbeispiels des Verfahrens gemäß der vorliegenden Erfindung.

In einem ersten Schritt S102 werden Schwingungen der Bodenplatte aufgrund einer Bewegung eines Objekts auf der Bodenplatte, insbesondere einer Begehung der Bodenplatte durch eine Person, erfasst. Dies geschieht durch einen Radarsensor. Dabei erzeugt der Radarsensor ein entsprechendes Signal, welches die Schwingungen aufweist bzw. aus welchem die Schwingungen abgeleitet/ausgelesen werden können (S104).

Optional können die Schwingungen der Bodenplatte durch einen oder mehrere zusätzliche Sensoren erfasst werden (S103), die entsprechende Signale erzeugen (S105). Als zusätzliche Sensoren sind beispielsweise Luftdrucksensoren denkbar, die dazu eingerichtet sind, den Luftdruck in der näheren Umgebung der Bodenplatte zu erfassen. Ebenso denkbar ist der Einsatz von Kohlemikrophonen zur Erfassung der Schwingungen.

Das Signal des Radarsensors und optional Signal(e) von einem oder mehreren zusätzlichen Sensoren werden dann im Schritt S106 ausgewertet bzw. es wird anhand des Signals/der Signale bestimmt, ob es sich bei dem Objekt um eine Person handelt. Mit anderen Worten wird im Schritt S106 über das Signal bestimmt, ob die erfassten Schwingungen von einer Person verursacht wurden oder verursacht worden sein könnten.

Im Schritt S108 werden Informationen hierüber einer Steuereinheit bereitgestellt, um die Sicherheit der Person gewährleisten zu können.

In einem optionalen Schritt S110 werden (Sicherheits-)Maßnahmen entsprechend den bereitgestellten Informationen eingeleitet. Insbesondere wird im Schritt S110 ein Sicherheitsalarm ausgelöst und/oder ein Stillsetzen (Anhalten oder Ausschalten) einer oder mehrerer technischer Anlagen (z.B. Maschinen, Roboter, fahrerlose Transportsysteme etc.) auf und/oder in der Nähe der Bodenplatte veranlasst, wenn Informationen vorliegen, wonach im Schritt S106 bestimmt worden ist, dass die Schwingungen der Bodenplatte durch eine Person verursacht wurden (oder (mit einer bestimmten Wahrscheinlichkeit) verursacht worden sein könnten).

Der Schutzbereich der vorliegenden Erfindung ist nicht auf die gezeigten Beispiele beschränkt, sondern wird ausschließlich durch die Ansprüche definiert, die im Folgenden formuliert sind. Diese Patentansprüche legen die rechtlichen Grenzen fest, innerhalb derer der Schutz gewährt wird und bestimmen somit, was genau durch das Patent geschützt ist. Jegliche Variationen, die innerhalb dieser Ansprüche fallen, sind daher als von der Erfindung umfasst zu betrachten, unabhängig davon, ob sie genau wie die gezeigten Beispiele ausgestaltet sind oder nicht.

### Bezugszeichenliste

- 10: System (zur Überwachung der Anwesenheit einer Person auf einer Bodenplatte)
- 12: Radarsensor
- 120: Strahlenkegel
- 14: Auswerteeinheit
- 15: Steuereinheit
- 40: Stütze (eines Doppelbodensystems)
- 42: Stütze
- 50: Bodenplatte
- 60: Person
- 70: Maschine
- 82: Luftdrucksensor
- 84: Kontaktschalter

## Patentansprüche

1. System (10) zur Überwachung der Anwesenheit einer Person (60) auf einer Bodenplatte (50), mit
einem Radarsensor (12), der dazu eingerichtet ist, Schwingungen der Bodenplatte (50) aufgrund einer Bewegung eines Objekts auf der Bodenplatte (50), insbesondere aufgrund einer Begehung der Bodenplatte (50) durch eine Person (60), zu erfassen und ein entsprechendes Signal zu erzeugen, und
einer Auswerteeinheit (14), die dazu eingerichtet ist, anhand des Signals zu bestimmen, ob es sich bei dem Objekt um eine Person (60) handelt, und einer Steuereinheit (16) entsprechende Informationen bereitzustellen, um die Sicherheit der Person (60) gewährleisten zu können.

2. System (10) gemäß Anspruch 1, wobei die Bodenplatte Teil eines Doppelbodensystems ist.

3. System (10) gemäß Anspruch 1 oder 2, wobei der Radarsensor (12) dazu eingerichtet in, an, unter oder über der Bodenplatte (50) angebracht zu werden.

4. System (10) gemäß einem der vorigen Ansprüche, wobei der Radarsensor (12) dazu eingerichtet ist, Schwingungen der Bodenplatte (50) in einem Frequenzbereich zwischen 1 Hz und 50 Hz, bevorzugt zwischen 3 Hz und 40 Hz, besonders bevorzugt zwischen 5 Hz und 30 Hz, zu erfassen, und/oder wobei der Radarsensor (12) dazu eingerichtet ist, in einem Frequenzbereich zwischen 60 GHz und 64 GHz betrieben zu werden.

5. System (10) gemäß einem der vorigen Ansprüche, ferner mit zumindest einem weiteren Sensor zur Erfassung der Schwingungen der Bodenplatte (50), wobei der zumindest eine weitere Sensor einen oder mehrere von
einem Kontaktschalter (84) zwischen der Bodenplatte und einem Kontaktelement,
einem Luftdrucksensor (82) zur Messung der Frequenz des Luftdrucks unter oder über der Bodenplatte,
einem Vibrationssensor, insbesondere ein Laser-Doppler-Vibrometer, einer Lichtschranke,
einem Köperschallsensor zur Messung des Köperschalls der Bodenplatte, einem Kraftsensor zur Messung einer Kraft, insbesondere einer Gewichtskraft, auf die Bodenplatte,
einem Dehnmessstreifen zur Messung von Dehnungen oder Stauchungen der Bodenplatte,
einer Sensorfolie mit Kohlesensorschichten auf der Ober- oder Unterseite der Bodenplatte, und
einem Beschleunigungssensor an der Bodenplatte und/oder einer Stütze der Bodenplatte
aufweist.

6. System (10) gemäß einem der vorigen Ansprüche, ferner mit der Bodenplatte (50).

7. System (10) gemäß Anspruch 6, wobei die Bodenplatte (50) ein oder mehrere Kohlemikrophone zur Messung der Schwingungen der Bodenplatte (50) aufweist und/oder wobei die Bodenplatte (50) Kohlepartikel aufweist und das System (10) einen Sensor zur Frequenzanalyse der Kohlepartikel aufweist.

8. System (10) gemäß einem der vorigen Ansprüche, ferner mit
der Steuereinheit (16), die dazu eingerichtet ist, einen Sicherheitsalarm auszulösen und/oder ein Stillsetzen einer oder mehrerer technischer Anlagen auf und/oder in der Nähe der Bodenplatte (50) zu veranlassen, wenn durch die Auswerteinheit (14) bestimmt wird, dass die Schwingungen der Bodenplatte (50) durch eine Person verursacht werden.

9. System (10) gemäß Anspruch 8, wobei die Auswerteeinheit (14) ferner dazu eingerichtet ist, das Signal des Radarsensors (12) zu filtern, insbesondere um Hintergrundrauschen zu unterdrücken.

10. Verfahren zur Überwachung der Anwesenheit einer Person auf einer Bodenplatte, mit
Erfassen von Schwingungen der Bodenplatte aufgrund einer Bewegung eines Objekts auf der Bodenplatte, insbesondere einer Begehung der Bodenplatte durch eine Person, durch einen Radarsensor,
Erzeugen eines entsprechenden Signals,
Bestimmung anhand des Signals, ob es sich bei dem Objekt um eine Person handelt, und
Bereitstellen entsprechender Informationen für eine Steuereinheit, um die Sicherheit der Person gewährleisten zu können.
